(19) Europäisches Patentamt
European Patent Office
Office européen des brevets

(11) EP 0 677 545 B1

(12) **EUROPEAN PATENT SPECIFICATION**

(45) Date of publication and mention of the grant of the patent:
**05.07.2000 Bulletin 2000/27**

(51) Int. Cl.$^7$: **C08G 64/30**

(21) Application number: **94105803.4**

(22) Date of filing: **14.04.1994**

(54) **Process for the preparation of (co)-polycarbonate**

Verfahren zur Herstellung von (Co)Polycarbonaten

Procédé pour la préparation de (co)polycarbonates

(84) Designated Contracting States:
**DE GB IT NL**

(43) Date of publication of application:
**18.10.1995 Bulletin 1995/42**

(73) Proprietor:
**DAICEL CHEMICAL INDUSTRIES, LTD.**
**Sakai-shi, Osaka (JP)**

(72) Inventors:
- **Kanno, Tatsuya**
  **Himeji-shi, Hyogo (JP)**
- **Fukuda, Yutaka**
  **Himeji-shi, Hyogo (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 351 168**
**EP-A- 0 360 578**
**EP-A- 0 501 374**
**EP-A- 0 583 936**
**EP-A- 0 584 801**
**EP-A- 0 592 900**
**BE-A- 676 977**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 677 545 B1

## Description

The present invention relates to a process for the preparation of a discoloration-free, high-molecular-weight (co)polycarbonate which comprises melt-polycondensing a dihydroxy compound with a carbonic diester containing specific impurities in reduced amounts through transesterification. Particularly, the present invention relates to a process for the preparation of a discoloration-free, high-molecular-weight (co)polycarbonate which comprises melt-polycondensing a dihydroxy compound with a carbonic diester containing specific impurities in reduced amounts through transesterification in the presence of (a) a specific nitrogen-containing basic compound and/or (b) a specific alkali metal compound and/or alkaline earth metal compound as a catalyst(s).

Although a discoloration-free, high-molecular-weight polycarbonate is a general-purpose engineering thermoplastic which is useful in various fields, particularly as injection molding material or sheet material substituting for window panes, the processes for the preparation thereof according to the prior art had various problems.

The interfacial polycondensation process is generally effective in preparing a polycarbonate, but has disadvantages that the use of toxic phosgene is necessitated and that the formed polycarbonate is contaminated with residual chlorine ions.

In order to overcome these disadvantages, Japanese Patent Publication-A No. 63-182336 (published on July 27, 1988) discloses a process for the preparation of a polycarbonate which comprises using liquid trichloromethyl chloroformate, which is a dimer of phosgene, instead of the toxic phosgene and polycondensing it with a special dihydric phenol by the interfacial process.

However, this patent document does not give any specific information about the special dihydric phenol with the exception of 9,9-bis(4-hydroxyphenyl)-fluorenes. Further, although Angew. Chem. 99, p.p. 922-923 (1987) (by H. Eckert and B. Forster; "Triphosgen em Kristalliner Phosgen-Ersatz") describes that a polycarbonate is prepared from 2,2-bis(4-hydroxyphenyl)propane by using triphosgene instead of the toxic phosgene, a reaction mechanism wherein phosgene is generated is also described therein.

Further, it is proposed in Japanese Patent Publication-A No. 4-100824 published on April 4, 1992) to use a diaryl carbonate having a xanthone content of 10 ppm or below. Although the use of such a carbonate can give a relatively light-colored polycarbonate, it has a problem that the obtained polycarbonate somewhat yellows as compared with that prepared by the phosgene process.

Furthermore, a process for the preparation of a polycarbonate using a catalyst system comprising a combination of a nitrogen-containing basic compound with a boron compound is proposed, for example, in U.S. Patent No. 4,590,257 (date of patent: May 20, 1986, assignee: General Electric Co.). Although this process can give a relatively light-colored polycarbonate in spite of the poor activity of the catalyst on the polymerization, the process has problems that it takes a long time to complete the polymerization because of the low activity of the catalyst on the polymerization to result in low industrial productivity and that not only a side reaction is liable to occur during the polymerization to form a branched structure but also the obtained polycarbonate is poor in heat stability. In addition to the U.S. Patent No. 4,590,257 described above, U.S. Patent Nos. 3442854 (assignee: FARBENFAB BAYER AG) and 5276109 (assignee: GENERAL ELECTRIC CO.; date of patent: Jan. 4, 1994), and European Patent Publication-A Nos. 351168 (published on Jan. 17, 1990) and 435124 (published on July 3, 1991) disclose that a boron compound such as boric acid and triphenylborate is useful to prevent the discoloration of the polycarbonate.

JP-A-4100824 discloses a process for producing an aromatic polycarbonate by reacting an aromatic dihydroxy compound with a diaryl carbonate, wherein the reaction is performed in the absence of any polymerization catalyst and the diaryl carbonate has a chlorine content of 0.05 ppm or below and a xanthone content of 10 ppm or below. According to said process, a discoloration-free high-quality aromatic polycarbonate can be obtained.

According to EP-A-584801, a colorless transparent polycarbonate is obtained by a transesterification process, comprising preparing a polycarbonate prepolymer from an aromatic dihydroxy compound and a carbonate diester having a benzophenone derivative content of 100 ppm or less, using an iminocarboxylic acid or salt thereof as a transesterification catalyst and polymerizing the prepolymer in an extruder.

The present inventors have extensively studied to solve the above problems and have found that a discoloration-free, high-molecular-weight polycarbonate can be prepared without using the toxic phosgene by melt-polycondensing a dihydroxy compound with a carbonic diester containing specific impurities in reduced amounts through transesterification in the presence of (a) a specific nitrogen-containing basic compound and/or (b) a specific alkali metal compound and/or alkaline earth metal compound as a catalyst(s).

Thus, the present invention relates to a process for the preparation of a (co)polycarbonate, wherein melt polycondensation of a dihydroxy compound with a carbonic diester is conducted in the presence of

(a) a nitrogen-containing basic compound selected from alkyl-, aryl- and alkylarylammonium hydroxides, tertiary amines, secondary amines represented by the formula: $R_2NH$ (wherein R is an alkyl group or an aryl group), primary amines represented by the formula: $RNH_2$ (wherein R is as defined above); ammonia, basic salts, 4-(4-methyl-1-piperidinyl)pyridine, 4-dimethylaminopyridine, 4-diethylaminopyridine, 4-pyrrolidinopyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, aminoquinoline, benzimidazole, imidazole, 2-methylimidazole, 4-methylimidazole, diazabicyclooctane (DABCO), 1,8-diazabicyclo[5.4.0]-7-undecene (DBU) and 4-(4-methylpyrrolidinyl)pyridine and/or

(b) an alkali metal compound and/or an alkaline earth metal compound selected from sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, alkali metal borates, sodium borohydride, lithium borohydride, potassium borohydride, sodium borophenylate, sodium benzoate, potassium benzoate, lithium benzoate, disodium hydrogenphosphate, dipotassium hydrogenphosphate, dilithium hydrogenphosphate, disodium, dipotassium and dilithium salts of bisphenol A, sodium, potassium and lithium salts of phenol, calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium carbonate, magnesium carbonate, strontium carbonate, barium acetate, magnesium acetate, strontium acetate, calcium stearate, barium stearate, magnesium stearate, strontium stearate and borates of alkaline earth metal compounds
as a catalyst,
the carbonic diester containing water in an amount of 0.3% by weight or below, chlorine in an amount of from above 4 to 5 ppm, sodium ions in an amount of 1 ppm or below and iron ions in an amount of 1 ppm or below and further satisfying at least two of the following requirements:

(1) the carbonic diester contains 50 ppm or below of a sum of phenylsalicylate, o-phenoxybenzoic acid and phenyl o-phenoxybenzoate,
(2) the carbonic diester contains 5 ppm or below of tin ions, and
(3) the carbonic diester contains 50 ppm or below of methyl phenyl carbonate.

Furthermore, the carbonic diester contains advantageously copper ions in an amount of 1 ppm or below and phosphorus ions in an amount of 20 ppm or below.

In the process according to the present invention, at least one compound selected from the group consisting of a boric acid, a borate and ammonium hydrogenphosphite is advantageously used as an acidic substance. The boric acid is preferably orthoboric acid.

In the present invention, the term "(co)polycarbonate" includes polycarbonate (homopolymer), copolycarbonate (copolymer) and copolyester carbonate (copolymer).

The requirement (1) means that the carbonic diester contains 50 ppm or below of a sum of phenyl salicylate, o-phenoxybenzoic acid and phenyl o-phenoxybenzoate. The requirement (2) means that the carbonic diester contains 5 ppm or below of tin ions. The requirement (3) means that the carbonic diester contains 50 ppm or below of methyl phenyl carbonate.

Further scope and applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

Representative examples of the dihydroxy compound to be used in the present invention include those represented by the following general formulae (I) to (IV):

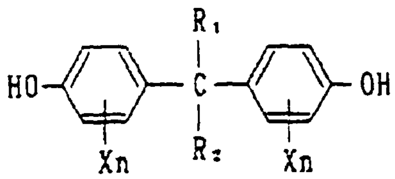

(I)

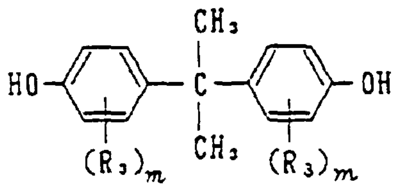

(II)

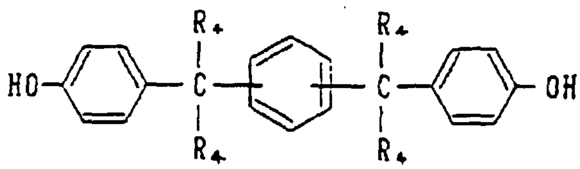

(III)

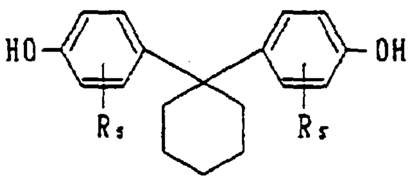

(IV)

wherein $R_1$, $R_2$, $R_3$, $R_4$ and $R_5$ are each a hydrogen atom, a linear or branched alkyl group having 1 to 8 carbon atoms or a phenyl group; X is a halogen atom; n is 0 or an integer of 1 to 4 and m is an integer of 1 to 4.

Examples of the bisphenol, that is the dihydroxy compound represented by the formula (I), include 2,2-bis(4-hydroxyphenyl)propane, 2,2-bis(4-hydroxyphenyl)butane, 2,2-bis(4-hydroxyphenyl)-4-methylpentane, 2,2-bis(4-hydroxyphenyl)octane, 4,4'-dihydroxy-2,2,2-triphenylethane and 2,2-bis(3,5-dibromo-4-hydroxyphenyl)propane.

Examples of the bisphenol represented by the formula (II) include 2,2-bis(4-hydroxy-3-methylphenyl)propane, 2,2-bis(4-hydroxy-3-isopropylphenyl)-propane, 2,2-bis(4-hydroxy-3-sec-butylphenyl)propane, 2,2-bis(3,5-dimethyl-4-hydroxyphenyl)propane and 2,2-bis(4-hydroxy-3-t-butylphenyl)propane.

Examples of the bisphenol represented by the formula (III) include 1,1'-bis(4-hydroxyphenyl)-p-diisopropylbenzene and 1,1'-bis(4-hydroxyphenyl)-m-diisopropylbenzene.

The bisphenol represented by the formula (IV) includes 1,1-bis(4-hydroxyphenyl)cyclohexane.

Further, a copolycarbonate can be prepared by using two or more dihydroxy compounds selected from among those represented by the formulae (I) to (IV).

Representative examples of the carbonic diester to be used in the present invention include diphenyl carbonate, ditolyl carbonate, bis(chlorophenyl) carbonate, m-cresyl carbonate, dinaphthyl carbonate, bis(biphenyl) carbonate, diethyl carbonate, dimethyl carbonate, dibutyl carbonate and dicyclohexyl carbonate, among which diphenyl carbonate is particularly preferable.

In the present invention, one or more carbonic diester(s) is(are) used as a monomer(s).

Alternatively, a combination of the carbonic diester with a dicarboxylic acid ester and/or a dicarboxylic acid may be used in the present invention. Examples of the dicarboxylic acid ester include diphenyl terephthalate and diphenyl isophthalate. Examples of the dicarboxylic acid include terephthalic acid and isophthalic acid. In this case, the amount of the sum of the dicarboxylic acid ester and the dicarboxylic acid is 50 mole % or below based on the sum of the amounts of the carbonic diester, the dicarboxylic acid and the dicarboxylic acid ester, and a copolyester carbonate is obtained by melt-polycondensation. Namely, in the present invention, the term "carbonic diester" includes generally the dicarboxylic acid (ester), too. When two or more carbonic diesters are used, a copolymer is obtained.

The carbonic diester to be used in the present invetion must satisfy at least two of the following requirements:

(1) the carbonic diester contains 50 ppm or below of a sum of phenyl salicylate. o-phenoxybenzoic add and phenyl o-phenoxybenzoate.
(2) the carbonic diester contains 5 ppm or below of tin ions, and
(3) the carbonic diester contains 50 ppm or below of methyl phenyl carbonate.

The impurities described above affect the hue and heat-resistance of the resulting (co)polycarbonate.

The carbonic diester to be used in the present invention contains water in an amount of 0.3% by weight or below, chlorine in an amount of from above 4 to 5 ppm, sodium ions in an amount of 1 ppm or below and iron ions in an amount of 1 ppm or below. Preferably, the carbonic diester to be used in the present invention contains copper ions in an amount of 1 ppm or below and phosphorus ions in an amount of 20 ppm or below.

When a carbonic diester not satisfying these requirements other than the water content used, the resulting (co)polycarbonate may be significantly discolored and have poor properties, particularly in heat stability. When the carbonic diester has a water content exceeding 0.3% by weight, the diester is hydrolyzed during the reaction, thereby losing the molar balance of monomers, so that no polymer having a high degree of polymerization is formed.

In the present invention, the chlorine which contributes to the chlorine content includes free chlorine ions, chlorine present in the form of an acid such as hydrochloric acid, chlorine present in the form of an inorganic salt such as sodium chloride and potassium chloride, and chlorine present in the form of an organic chlorine compound such as phenyl chloroformate. The chlorine content is determined by ion chromatography.

The removal of the above impurities from the carbonic diester can be conducted by, e.g., (1) a process which comprises washing a carbonic diester with hot water or an aqueous weak-base solution, (2) a process which comprises adding urea to a carbonic diester and heat-melting the obtained mixture, or (3) a process which comprises adding a salt of an alkali or alkaline earth metal, for example, $Na_2CO_3$, $NaHCO_3$, $KH_2PO_4$ or $K_2HPO_4$, to a carbonic diester and distilling the obtained mixture in a vacuum.

The methods for measuring the impurities in the carbonic diester are described with respect to the Examples of the present invention hereinafter.

The necessary amount of the carbonic diester is equimolar with that of the dihydroxy compound. Generally, a carbonic diester must be reacted with a dihydroxy compound at a molar ratio of 1 : 1 in order to form a high-molecular-weight (co)polycarbonate. When bisphenyl carbonate is used as a carbonic diester, two mol of phenol is formed by the reaction of bisphenyl carbonate with the dihydroxy compound. The phenol is distilled off from the reaction system. In the present invention, the carbonic diester is preferably used in an amount of 1.01 to 1.5 mol, still preferably 1.015 to 1.20 mol per mol of the dihydroxy compound for the purpose of improving the physical properties of the resulting (co)polycarbonate. particularly for lowering the terminal hydroxyl concentration of the resulting (co)polycarbonate as much as possible to thereby get rid of adverse effect on the hue thereof.

The terminal hydroxyl concentration of the (co)polycarbonate obtained according to the present invention is in the range of preferably 3 to 70 mole %, still preferably 3 to 50 mole %, and particularly preferably 3 to 30 mole %. It is practically difficult to realize a terminal hydroxyl concentration of less than 3 mole %. On the country, when it exceeds 30 mole %, the resulting (co)polycarbonate is significantly discolored, and when it exceeds 50 mole %, the heat stability of the (co)polycarbonate is also impaired. A (co)polycarbonate having a terminal hydroxyl concentration of 3 to 50 mole % can be used singly. A (co)polycarbonate having a terminal hydroxyl concentration of above 50 to 70 mole % can be used in the form of a blend with another polymer.

To lower the teminal hydroxyl concentration of a resulting (co)polycarbonate, a carbonic diester, an ester compound or a phenol may be added to the reaction system as a terminal-blocking agent. The blocking agent is used in an amount of preferably 0.05 to 10 mole %, still preferably 1 to 5 mole % based on the dihydroxy compound. Thus, the carbonic diester is used as a monomer and as a blocking agent. Accordingly, the amount of the carbonic diester affects the teminal hydroxyl concentration of a resulting (co)polycarbonate.

In the present invention, the melt polycondensation of a dihydroxy compound with a carbonic diester is conducted in the presence of (a) a specific nitrogen-containing basic compound and/or (b) a specific alkali metal compound and/or alkaline earth metal compound, preferably in the presence of a specific nitrogen-containing basic compound

and, optionally, a specific alkali metal compound or alkaline earth metal compound as a catalyst(s).

The nitrogen-containing basic compound to be used in the present invention is selected from alkyl-, aryl- and alkylarylammonium hydroxides such as tetramethylammonium hydroxide ($Me_4NOH$), tetraethylammonium hydroxide ($Et_4NOH$). tetrabutylammonium hydroxide ($Bu_4NOH$) and trimethylbenzylammonium hydroxide ($C_6H_5$-$CH_2(Me)_3NOH$); tertiary amines such as trimethylamine, triethylamine, dimethylbenzylamine and triphenylamine; secondary amines represented by the formula: $R_2NH$ (wherein R is an alkyl group such as a methyl or ethyl group or an aryl group such as a phenyl or tolyl group); primary amines represented by the formula: $RNH_2$ (wherein R is as defined above); ammonia: and basic salts such as tetramethylammonium borohydride ($Me_4NBH_4$). tetrabutylammonium borohydride ($Bu_4NBH_4$). tetrabutylammonium tetraphenylborate ($Bu_4NBPh_4$) and tetramethylammonium terraphenylborate ($Mu_4NBPh_4$); 4-(4-methyl-1-piperidinyl)pyridine. 4-dimethylaminopyridine, 4-diethylaminopyridine, 4-pyrrolidinopyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, aminoquinoline, benzimidazole, imidazole, 2-methylimidazole, 4-methylimidazole, diazabicyclooctane (DABCO), 1,8-diazabicyclo[5.4.0]-7-undecene (DBU) and 4-(4-methylpyrrolidinyl)pyridine.

The alkali metal compound to be used in the present invention is selected from sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, borates of alkali metal compounds, such as sodium borate, lithium borate, potassium borate; sodium borohydride, lithium borohydride, potassium borohydride, sodium borophenylate, sodium benzoate, potassium benzoate, lithium benzoate, disodium hydrogenphosphate, dipotassium hydrogenphosphate, dilithium hydrogenphosphate, disodium, dipotassium and dilithium salts of bisphenol A, and sodium, potassium and lithium salts of phenol, among which lithium borate, potassium borate and potassium acetate are preferable.

The alkaline earth metal compound to be used in the present invention is selected from calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium carbonate, magnesium carbonate, strontium carbonate, barium acetate, magnesium acetate, strontium acetate, calcium stearate, barium stearate, magnesium stearate, strontium stearate and borates of alkaline earth metal compounds.

Preferred examples of the alkali metal compound and the alkaline earth metal compound include borates of alkali metal compounds and borates of alkaline earth metal compound.

The amount of the nitrogen-containing basic compound to be used as a catalyst must range from $10^{-6}$ to $10^{-1}$ mol, preferably from $10^{-4}$ to $10^{-2}$ mol, per mol of the dihydroxy compound fed in the reaction system. If the amount is less than $10^{-6}$ mol, the catalytic activity is poor to result in slow polycondensation, while if it exceeds $10^{-1}$ mol, the obtained (co)polycarbonate is significantly contaminated with the catalyst to result in poor properties.

The total amount of the alkali metal compound and the alkaline earth metal compound to be used as a catalyst(s) must be within the range of $10^{-7}$ to $10^{-2}$ mol, preferably $10^{-5}$ to $10^{-3}$ mol, per mol of the dihydroxy compound fed in the reaction system. When the amount is less than $10^{-7}$ mol, the catalytic activity is too poor to obtain a (co)polycarbonate having a desired degree of polymerization while when it exceeds $10^{-2}$ mol, the resulting (co)polycarbonate is significantly contaminated with the co-catalyst to result in poor properties.

When one catalyst is used, it may be fed into a reactor with the feeding of the monomers or stepwise in the course of the reaction. When two or more catalysts are used, they may be added simultaneously with the feeding of the monomers or stepwise in the course of the reaction.

The melt-polycondensation is preferably effected in the presence of, further, at least one compound selected from the group consisting of a boric acid, a borate and ammonium hydrogenphosphite as an acidic substance.

The boric acid as the acidic substance includes e.g. metaboric acid, orthoboric acid and tetraboric acid. Among them, orthoboric acid is preferred. Representative examples of the borate as the acidic substance include triphenyl borate, trimethyl borate, triethyl borate, butyl borate and tritolyl borate. Further, ammonium hydrogenphosphite is also used as the acidic substance.

The acidic substance may be added in the early stage of the reaction, in the middle stage of the reaction or after the completion thereof, and is preferably added in the early stage of the reaction. The acidic substance added neutralizes the basic polymerization catalyst, serving to improve the heat stability of the (co)polycarbonate.

The acidic substance is used in an amount of 0.01 to 500 mol, preferably 0.01 to 10 mol based on 1 mol of the basic polymerization catalyst. When the amount is less than 0.01 mol, the resulting (co)polycarbonate will be little improved in heat stability, while when it exceeds 500 mol, the resulting (co)polycarbonate will have a too low degree of polymerization, which is unfavorable.

The boric acid or borate is used in such amount that the amount of the boron atoms of the boric acid or borate is 0.01 to 500 mol, preferably 0.01 to 10 mol based on 1 mol of the basic group of the nitrogen-containing basic compound as the catalyst. The boric acid or borate is used in such amount that the amount of the boron atoms of the boric acid or borate is 0.01 to 500 mol, preferably 5 to 200 mol based on 1 mol of the alkali metal or alkaline earth metal

atoms of the alkali metal or alkaline earth metal compound as the catalyst. The boric acid or borate is used in such amount that the amount of the boron atoms of the boric acid or borate is 0.01 to 500 mol based on 1 mol of the sum of the basic groups of the nitrogen-containing basic compound and the alkali metal or alkaline earth metal atoms of the alkali metal or alkaline earth metal compound.

The ammonium hydrogenphosphite is used as an acidic substance in such amount that the amount of the phosphorus atoms of the ammonium hydrogenphosphite is 0.01 to 500 mol based on 1 mol of the basic groups of the nitrogen-containing basic compound as the catalyst. The ammonium hydrogenphosphite is used in such amount that the amount of the phosphorus atoms of the ammonium hydrogenphosphite is 0.01 to 500 mol based on 1 mol of the alkali metal or alkaline earth metal atoms of the alkali metal or alkaline earth metal compound as the catalyst. The ammonium hydrogenphosphite is used in such amount that the amount of the phosphorus atoms of the ammonium hydrogenphosphite is 0.01 to 500 mol based on 1 mol of the sum of the basic groups of the nitrogen-containing basic compound and the alkali metal or alkaline earth metal atoms of the alkali metal or alkaline earth metal compound.

In the process according to the present invention, the melt-polycondensation can proceed at a temperature ranging from 100 to about 300°C. The reaction temperature is preferably from 130 to 280°C. When the reaction temperature is lower than 100°C. the reaction is too slow, while when it exceeds 300°C, a side reaction is liable to occur.

According to the present invention, a substantially chlorine-free, high-molecular-weight, colorless and transparent (co)polycarbonate can be prepared without using toxic phosgene by using a raw material containing only low amounts of specific impurities and, as a catalyst system, (a) a specific nitrogen-containing basic compound and/or (b) specific alkali metal compound and/or alkaline earth metal compound. alkaline earth metal compound.

## Examples

The present invention will now be described in more detail with reference to the following Examples which should not be considered to limit the scope of the present invention.

Various values shown in the following Examples were determined as follows:

(1) Viscosity-average molecular weight (Mv)

The viscosity-average molecular weight (Mv) of the (co)polycarbonate was determined by calculation based on the intrinsic viscosity number [η] of a methylene chloride solution of each reaction mixture comprising mainly a (co)polycarbonate as determined at 20°C with an Ubbellohde viscometer according to the following formula:

$$[\eta] = 1.11 \times 10^{-4} (Mv)^{0.82}$$

(2) Glass transition point

The glass transition point of the (co)polycarbonate was measured with the use of differential scanning calorimeter (Perkin-Elmer 2C).

(3) Terminal hydroxyl concentration

The terminal hydroxyl concentration of the (co)polycarbonate was determined by subjecting each reaction mixture comprising mainly a (co)polycarbonate to $^{13}$C-NMR spectroscopy according to the gated decoupling measurement mode and calculating the area ratio of the peak at 114.80 ppm to that at 129.50 ppm.

(4) Hue

The hue of each reaction mixture comprising mainly a (co)polycarbonate was evaluated by naked eye.

(5) Impurity contents

a) Method for determining phenyl salicylate, o-phenoxybenzoic acid and phenyl o-phenoxybenzoate content, or methyl phenyl carbonate content

The content was determined by the use of a gas chromatograph (mfd. by Shimadzu Corporation, GC-14A).

b) Method for determining the tin ion content

The content was determined with an atomic absorption spectrometer (mfd. by Shimadzu Corporation, AA-670

G) and a graphite furnaced analyzer (mfd. by Shimadzu Corporation, GFA-4A).

c) Method for determining the chlorine content

A sample (5 g) was dissolved in 10 ml of toluene, followed by the addition of 10 ml of an eluent (an aqueous solution containing 2.8 mmol of $NaHCO_3$ and 2.25 mmol of $Na_2CO_3$) and 15 ml of highly deionized water in this order. The obtained mixture was shaken and then left to stand. The upper toluene layer formed was removed. The resulting aqueous phase was treated with C-18 SEP-PAK in order to remove contaminant toluene. The aqueous phase thus treated was subjected to ion chromatography (YOKOGAWA SAX-1) to determine the chlorine content.

d) Method for determining the sodium ion content or iron ion content

The content was determined with an atomic absorption spectrometer (SAS-727 mfd. by Seiko Instruments, Inc.)

e) Method for determining the copper ion content or phosphorus ion content

The content was determined with an inductively coupled plasma (ICP) emission spectrometer (mfd. by Shimadzu Corporation, ICPS-1000III).

f) Method for determining the water content

The content was determined with a trace water measuring apparatus (mfd. by Mitsubishi Chemical Industries Ltd., CA-05).

(6) Storage stability

The YI of each sheet [50 × 50 × 2 mm (H-W-D)] prepared with each reaction mixture comprising mainly a (co)polycarbonate by the hot pressing quenching process was determined on a color difference meter (mfd. by Nippon Denshoku, 300A) before and after storage at 160°C for 720 hours.

Reference Example

22.8 g (0.1 mol) of 2,2-bis(4-hydroxyphenyl)-propane (BPA), 0.00244 g ($2 \times 10^{-4}$ mol per mol of BPA) of 4-dimethylaminopyridine and 21.96 g (0.1025 mol) of diphenyl carbonate having impurity contents given in Table 1 were fed into a reactor and stirred together in a nitrogen atmosphere at 180°C for one hour. The temperature of the resulting mixture was raised while gradually evacuating the reaction system. Finally, the mixture was polycondensed at 270°C in a vacuum of 0.1 Torr for one hour, with the removal of formed phenol by distillation. Thus, a reaction mixture comprising mainly a polycarbonate was obtained.

Examples 1 and 2

Polycarbonates were prepared by polycondensation in the same manner as in the Reference Example, except that different diphenyl carbonates each having impurity contents given in Table 1 were used instead of the diphenyl carbonate used in the Reference Example.

Comparative Examples 1 to 4

Other polycarbonates were prepared by polycondensation in the same manner as in the Reference Example, except that different diphenyl carbonates each having impurity contents given in Table 1 were used instead of the diphenyl carbonate used in the Reference Example.

Comparative Example 5

A polycarbonate was prepared by polycondensation in the same manner as in the Reference Example, except that a different diphenyl carbonate having impurity contents given in Table 1 was used instead of the diphenyl carbonate used in the Reference Example and except that 0.000086 g ($1 \times 10^{-5}$ mol per mol of BPA) of lithium metaborate dihydrate was used instead of the 4-dimethylaminopyridine and that 0.001 g ($1.6 \times 10^{-4}$ mol per mol of BPA) of boric acid was further added.

The viscosity-average molecular weight (Mv), glass transition point and terminal hydroxyl concentration of each (co)polycarbonate prepared, the hue of each reaction mixture obtained and the YI value of each sheet prepared with each reaction mixture are given in Table 2.

Table 1

| Kind of Impurities | Ref. Ex. | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|
| total content of phenyl salicylate, o-phenoxybenzoic acid and phenyl o-phenoxybenzoate (ppm) | 35 | 35 | 41 | 40 | 40 | 38 | 60 | 38 |
| tin ion content (ppm) | 1 | 1 | 0.9 | 1.5 | 0.8 | 6 | 1 | 6 |
| methyl phenyl carbonate content (ppm) | 7 | 8 | 11 | 5 | 100 | 10 | 8 | 10 |
| chlorine content (ppm) | <0.5 | 4.5 | 4.8 | 6 | <0.5 | <0.5 | <0.5 | <0.5 |
| sodium ion content (ppm) | <0.5 | <0.5 | <0.5 | 0.5 | 0.8 | 0.8 | <0.5 | 0.8 |
| iron ion content (ppm) | <0.1 | <0.1 | <0.1 | 0.5 | 0.5 | 0.5 | <0.1 | 0.5 |
| copper ion content (ppm) | <0.1 | <0.1 | <0.1 | <0.1 | <0.1 | 0.5 | <0.1 | <0.1 |
| phosphorus ion content (ppm) | 13 | 4 | 8 | 15 | 18 | 15 | 12 | 18 |
| water content (wt%) | 0.21 | 0.22 | 0.19 | 0.27 | 0.20 | 0.25 | 0.23 | 0.20 |

Table 2

| | | Ref. Ex. | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|---|
| molecular weight (Mw) | | 29,00 | 26,000 | 28,600 | 24,500 | 26,000 | 19,500 | 26,500 | 23,000 |
| glass transition point (°C) | | 150 | 152 | 148 | 145 | 145 | 130 | 148 | 145 |
| terminal hydroxyl concentration (mol %) | | 26 | 28 | 28 | 28 | 25 | 35 | 40 | 38 |
| hue | | colorless & transparence | colorless & transparence | colorless & transparence | pale yellow & transparence | light red & transparence | yellow & transparence | pale yellow & transparence | yellow & transparence |
| stability | YI value (before storage) | 1.2 | 1.3 | 1.5 | 2.6 | 2.1 | 9.5 | 3.0 | 8.7 |
| | YI value (after storage) | 10.0 | 18.1 | 21.6 | 48.4 | 28.0 | 45.0 | 32.1 | 43.0 |

## Claims

1. A process for the preparation of a (co)polycarbonate, wherein a melt polycondensation of a dihydroxy compound with a carbonic diester is conducted in the presence of

(a) a nitrogen-containing basic compound selected from alkyl-, aryl- and alkylarylammonium hydroxides, tertiary amines, secondary amines represented by the formula: $R_2NH$ (wherein R is an alkyl group or an aryl group), primary amines represented by the formula: $RNH_2$ (wherein R is as defined above); ammonia, basis ammonium salts, 4-(4-methyl-1-piperidinyl)pyridine, 4-dimethylaminopyridine, 4-diethylaminopyridine, 4-pyrrolidinopyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, aminoquinoline, benzimidazole, imidazole, 2-methylimidazole, 4-methylimidazole, diazabicyclooctane (DABCO), 1,8-diazabicyclo[5.4.0]-7-undecene (DBU) and 4-(4-methylpyrrolidinyl)pyridine and/or

(b) an alkali metal compound and/or an alkaline earth metal compound selected from sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, alkali metal borates, sodium borohydride, lithium borohydride, potassium borohydride, sodium borophenylate, sodium benzoate, potassium benzoate, lithium benzoate, disodium hydrogenphosphate, dipotassium hydrogenphosphate, dilithium hydrogenphosphate, disodium, dipotassium and dilithium salts of bisphenol A, sodium, potassium and lithium salts of phenol, calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium carbonate, magnesium carbonate, strontium carbonate, barium acetate, magnesium acetate, strontium acetate, calcium stearate, barium stearate, magnesium stearate, strontium stearate and borates of alkaline earth metal compounds

as a catalyst,

the carbonic diester containing water in an amount of 0.3% by weight or below, chlorine in an amount of from above 4 to 5 ppm, sodium ions in an amount of 1 ppm or below and iron ions in an amount of 1 ppm or below and further satisfying at least two of the following requirements:

(1) the carbonic diester contains 50 ppm or below of a sum of phenylsalicylate, o-phenoxybenzoic acid and phenyl o-phenoxybenzoate,

(2) the carbonic diester contains 5 ppm or below of tin ions, and

(3) the carbonic diester contains 50 ppm or below of methyl phenyl carbonate.

**2.** The process of claim 1, wherein the carbonic diester contains copper ions in an amount of 1 ppm or below and phosphorus ions in an amount of 20 ppm or below.

**3.** The process of claim 1, wherein the alkali metal compound and/or the alkaline earth metal compound is (are) a borate(s).

**4.** The process of claim 1, wherein the amount of the nitrogen-containing basic compound used is $10^{-6}$ to $10^{-1}$ mol per mol of the dihydroxy compound, and the total amount of the alkali metal compound and the alkaline earth metal compound used is $10^{-7}$ to $10^{-2}$ mol per mol of the dihydroxy compound.

**5.** The process of claim 1, wherein the carbonic diester is used in an amount of 1.01 to 1.5 mol per mol of the dihydroxy compound.

**6.** The process of claim 1, wherein the formed (co)polycarbonate has a terminal hydroxyl concentration of 3 to 30 mole %.

**7.** The process of claim 1, wherein the dihydroxy compound is a phenolic compound selected from the group consisting of compounds represented by the following general formulae (I) to (IV):

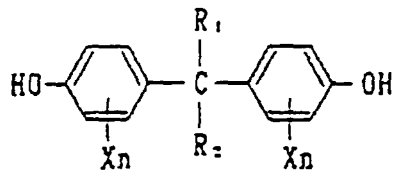

(I)

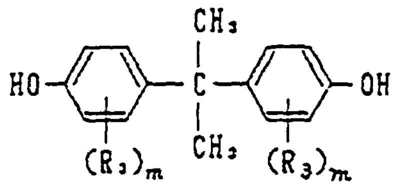

(II)

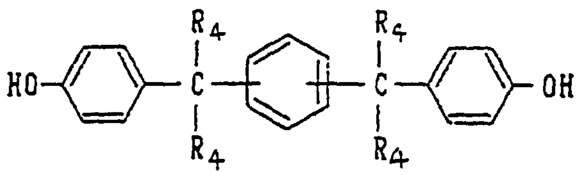

(III)

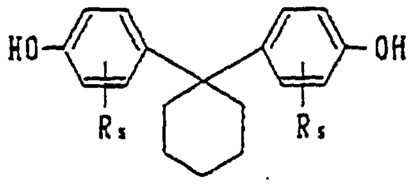

(IV)

wherein $R_1$, $R_2$, $R_3$, $R_4$ and $R_5$ are each a hydrogen atom, a linear or branched alkyl group having 1 to 8 carbon atoms or a phenyl group; X is a halogen atom; n is 0 or an integer of 1 to 4 and m is an integer of 1 to 4.

**8.** The process of claim 1, wherein two or more dihydroxy compounds and/or two or more carbonic diesters are used to prepare a copolycarbonate.

**9.** The process of claim 1, wherein at least one compound selected from the group consisting of a boric acid, a borate and ammonium hydrogenphosphite is used as an acidic substance.

**10.** The process of claim 9, wherein the boric acid is orthoboric acid.

**Patentansprüche**

**1.** Verfahren zur Herstellung eines (Co)polycarbonats, worin eine Schmelz-Polykondensation einer Dihydroxyverbindung mit einem Kohlensäurediester durchgeführt wird in Anwesenheit von

(a) einer Stickstoff enthaltenden basischen Verbindung, gewählt aus Alkyl-, Aryl- und Alkylarylammoniumhydroxiden, tertiären Aminen, sekundären Aminen der Formel: $R_2NH$ (worin R eine Alkylgruppe oder eine Arylgruppe bedeutet), primären Aminen der Formel $RNH_2$ (worin R wie vorstehend angegeben definiert ist), Ammoniak, basischen Ammoniumsalzen, 4-(4-Methyl-1-piperidinyl)pyridin, 4-Dimethylaminopyridin, 4-Diethylaminopyridin, 4-Pyrrolidinopyridin, 4-Aminopyridin, 2-Aminopyridin, 2-Hydroxypyridin, 2-Methoxypyridin, 4-Methoxypyridin, 4-Hydroxypyridin, 2-Dimethylaminoimidazol, 2-Methoxyimidazol, 2-Mercaptoimidazol, Aminochinolin, Benzimidazol, Imidazol, 2-Methylimidazol, 4-Methylimidazol, Diazabicyclooctan (DABCO), 1,8-Diazabicyclo[5.4.0]-7-undecen (DBU) und 4-(4-Methylpyrrolidinyl)pyridin und/oder

(b) einer Alkalimetallverbindung und/oder einer Erdalkalimetallverbindung, gewählt aus Natriumhydroxid, Kaliumhydroxid, Lithiumhydroxid, Natriumhydrogencarbonat, Kaliumhydrogencarbonat, Lithiumhydrogencarbonat, Natriumcarbonat, Kaliumcarbonat, Lithiumcarbonat, Natriumacetat, Kaliumacetat, Lithiumacetat, Natriumstearat, Kaliumstearat, Lithiumstearat, Alkalimetallboraten, Natriumborhydrid, Lithiumborhydrid, Kaliumborhydrid, Natriumborophenylat, Natiumbenzoat, Kaliumbenzoat, Lithiumbenzoat, Dinatriumhydrogenphosphat, Dikaliumhydrogenphosphat, Dilithiumhydrogenphosphat, Dinatrium-, Dikalium- und Dilithumsalzen von Bisphenol A, Natrium-, Kalium- und Lithiumsalzen von Phenol, Calciumhydroxid, Bariumhydroxid, Magnesiumhydroxid, Strontiumhydroxid, Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Bariumacetat, Magnesiumacetat, Strontiumacetat, Calciumstearat, Bariumstearat, Magnesiumstearat, Strontiumstearat und Boraten von Erdalkaliverbindungen
als Katalysator,
wobei der Kohlensäurediester Wasser in einer Menge von 0,3 Gew.-% oder weniger, Chlor in einer Menge von mehr als 4 bis 5 ppm, Natriumionen in einer Menge von 1 ppm oder weniger und Eisenionen in einer Menge von 1 ppm oder weniger enthält und außerdem mindestens zwei der folgenden Bedingungen erfüllt:

(1) der Kohlensäurediester enthält 50 ppm oder weniger der Gesamtmenge von Phenylsalicylat, o-Phenoxybenzoesäure und Phenyl-o-phenoxybenzoat,

(2) der Kohlensäurediester enthält 5 ppm oder weniger an Zinnionen, und

(3) der Kohlensäurediester enthält 50 ppm oder weniger Methylphenylcarbonat.

**2.** Verfahren nach Anspruch 1, worin der Kohlensäurediester Kupferionen in einer Menge von 1 ppm oder weniger und Phosphorionen in einer Menge von 20 ppm oder weniger enthält.

**3.** Verfahren nach Anspruch 1, worin die Alkalimetallverbindung und/oder die Erdalkalimetallverbindung ein Borat ist (Borate sind).

**4.** Verfahren nach Anspruch 1, worin die Menge der verwendeten Stickstoff enthaltenden basischen Verbindung $10^{-6}$ bis $10^{-1}$ mol pro mol der Dihydroxyverbindung beträgt, und die Gesamtmenge der verwendeten Alkalimetallverbindung und Erdalkalimetallverbindung $10^{-7}$ bis $10^{-2}$ mol pro mol der Dihydroxyverbindung beträgt.

**5.** Verfahren nach Anspruch 1, worin der Kohlensäurediester in einer Menge von 1,01 bis 1,5 mol pro mol der Dihydroxyverbindung verwendet wird.

**6.** Verfahren nach Anspruch 1, worin das gebildete (Co)polycarbonat eine Konzentration an terminalen Hydroxylgruppen von 3 bis 30 mol% aufweist.

**7.** Verfahren nach Anspruch 1, worin die Dihydroxyverbindung eine phenolische Verbindung, gewählt aus der Gruppe, bestehend aus Verbindungen der folgenden allgemeinen Formeln (I) bis (IV), ist:

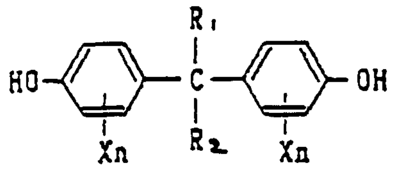

(I)

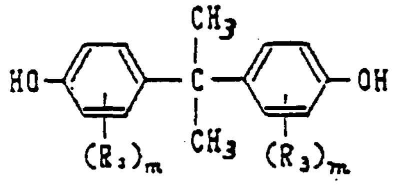

(II)

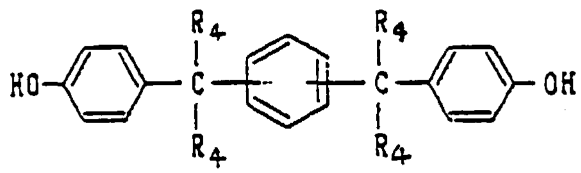

(III)

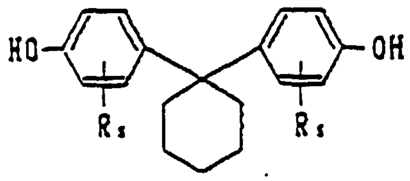

(IV)

worin $R_1$, $R_2$, $R_3$, $R_4$ und $R_5$ jeweils ein Wasserstoffatom, eine lineare oder verzweigte Alkylgruppe mit 1 bis 8 Kohlenstoffatomen oder eine Phenylgruppe bedeuten; X ein Halogenatom bedeutet; n 0 oder eine ganze Zahl von 1 bis 4 ist und m eine ganze Zahl von 1 bis 4 ist.

**8.** Verfahren nach Anspruch 1, worin zwei oder mehr Dihydroxyverbindungen und/oder zwei oder mehr Kohlensäurediester verwendet werden um ein Copolycarbonat herzustellen.

**9.** Verfahren nach Anspruch 1, worin mindestens eine Verbindung, gewählt aus der Gruppe, bestehend aus Borsäure, einem Borat und Ammoniumhydrogenphosphit, als saure Substanz verwendet wird.

**10.** Verfahren nach Anspruch 9, worin die Borsäure Orthoborsäure ist.

**Revendications**

**1.** Procédé de préparation d'un (co)polycarbonate, dans lequel on effectue une polycondensation à l'état fondu d'un composé dihydroxylé avec un diester carbonique en présence de

(a) un composé basique azoté choisi parmi des hydroxydes d'alkyl-, d'aryl- et d'alkylarylammonium, des amines tertiaires, des amines secondaires représentées par la formule : $R_2NH$ (dans laquelle R est un groupe alkyle ou un groupe aryle), des amines primaires représentées par la formule : $RNH_2$ (dans laquelle R est tel que défini plus haut) ; l'ammoniaque, des sels basiques d'ammonium, la 4-(4-méthyl-1-pipéridinyl)pyridine, la 4-diméthylamino-pyridine, la 4-diéthylaminopyridine, la 4-pyrrolidinopyridine, la 4-aminopyridine, la 2-aminopyridine, la 2-hydroxypyridine, la 2-méthoxypyridine, la 4-méthoxypyridine, la 4-hydroxypyridine, le 2-diméthylaminoimidazole, le 2-méthoxyimidazole, le 2-mercaptoimidazole, l'aminoquinoléine, le benzimidazole, l'imidazole, le 2-méthylimidazole, le 4-méthylimidazole, le diazabicyclooctane (DABCO), le 1,8-diazabicyclo[5.4.0]-7-undécène (DBU) et la 4-(4-méthylpyrrolidinyl)pyridine et/ou

(b) un composé métallique alcalin et/ou un composé métallique alcalino-terreux choisis parmi l'hydroxyde de sodium, l'hydroxyde de potassium, l'hydroxyde de lithium, l'hydrogénocarbonate de sodium, l'hydrogénocarbonate de potassium, l'hydrogénocarbonate de lithium, le carbonate de sodium, le carbonate de potassium, le carbonate de lithium, l'acétate de sodium, l'acétate de potassium, l'acétate de lithium, le stéarate de sodium, le stéarate de potassium, le stéarate de lithium, les borates de métaux alcalins, le borohydrure de sodium, le borohydrure de lithium, le borohydrure de potassium, le borophénylate de sodium, le benzoate de sodium, le benzoate de potassium, le benzoate de lithium, l'hydrogénophosphate disodique, l'hydrogénophosphate dipotassique, l'hydrogénophosphate de dilithium, les sels disodique, dipotassique, et les sels du dilithium du bisphénol A, les sels sadique, potassique, et les sels du lithium du phénol, l'hydroxyde de calcium, l'hydroxyde de baryum, l'hydroxyde de magnésium, l'hydroxyde de strontium, l'hydrogénocarbonate de calcium, l'hydrogénocarbonate de baryum, l'hydrogénocarbonate de magnésium, l'hydrogénocarbonate de strontium, le carbonate de calcium, le carbonate de baryum, le carbonate de magnésium, le carbonate de strontium, l'acétate de baryum, l'acétate de magnésium, l'acétate de strontium, le stéarate de calcium, le stéarate de baryum, le stéarate de magnésium, le stéarate de strontium et les borates de composés métalliques alcalino-terreux
en tant que catalyseur,
le diester carbonique contenant de l'eau en une quantité de 0,3% en poids ou moins, du chlore en une quantité de plus de 4 à 5 ppm, des ions sodium en une quantité de 1 ppm ou moins et des ions fer en une quantité de 1 ppm ou moins et satisfaisant en outre au moins deux des conditions suivantes :

(1) le diester carbonique contient 50 ppm ou moins d'un total de salicylate de phényle, acide o-phénoxybenzoïque et o-phénoxybenzoate de phényle,
(2) le diester carbonique contient 5 ppm ou moins d'ions étain, et
(3) le diester carbonique contient 50 ppm ou moins de carbonate de méthyle et de phényle.

**2.** Procédé selon la revendication 1, dans lequel le diester carbonique contient des ions cuivre à raison de 1 ppm ou moins et des ions phosphore à raison de 20 ppm ou moins.

**3.** Procédé selon la revendication 1, dans lequel le composé métallique alcalin et/ou le composé métallique alcalino-terreux est (sont) un borate(s).

**4.** Procédé selon la revendication 1, dans lequel la quantité de composé basique azoté utilisé varie entre $10^{-6}$ et $10^{-1}$ mole par mole de composé dihydroxylé, et la quantité totale de composé métallique alcalin et de composé métallique alcalino-terreux utilisée varie de $10^{-7}$ à $10^{-2}$ mole par mole de composé dihydroxylé.

**5.** Procédé selon la revendication 1, dans lequel le diester carbonique est utilisé à raison de 1,01 à 1,5 mole par mole de composé dihydroxylé.

**6.** Procédé selon la revendication 1, dans lequel le (co)polycarbonate formé a une concentration en hydroxy terminal de 3 à 30% en mole.

**7.** Procédé selon la revendication 1, dans lequel le composé dihydroxylé est un composé phénolique choisi dans le groupe constitué des composés représentés par les formules générales suivantes (I) à (IV) :

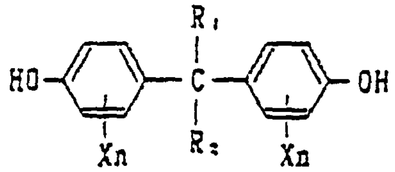

(I)

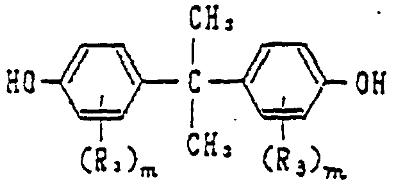

(II)

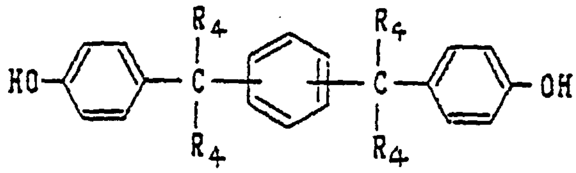

(III)

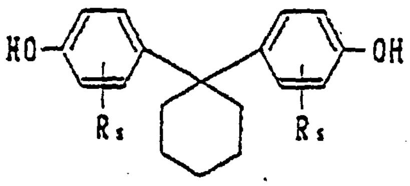

(IV)

dans lesquelles $R_1$, $R_2$, $R_3$, $R_4$ et $R_5$ sont chacun un atom d'hydrogène, un groupe alkyle linéaire ou ramifié de 1 à 8 atomes de carbone ou un groupe phényle ; X est un atome d'halogène ; n est 0 ou un entier de 1 à 4 et m est un entier de 1 à 4.

**8.** Procédé selon la revendication 1, dans lequel deux ou plusieurs composés dihydroxylés et/ou deux ou plusieurs diesters carboniques sont utilisés pour préparer un copolycarbonate.

**9.** Procédé selon la revendication 1, dans lequel au moins un composé choisi dans le groupe constitué d'un acide borique, d'un borate et de l'hydrogénophosphite d'ammonium, est utilisé en tant que substance acide.

**10.** Procédé selon la revendication 9, dans lequel l'acide borique est l'acide orthoborique.